(19) Europäisches Patentamt
European Patent Office
Office européen des brevets

(11) **EP 1 860 641 A1**

(12) **EUROPEAN PATENT APPLICATION**
published in accordance with Art. 158(3) EPC

(43) Date of publication:
**28.11.2007 Bulletin 2007/48**

(51) Int Cl.:
*G09G 5/26* (2006.01)  *G09G 5/00* (2006.01)
*H04N 5/445* (2006.01)  *H04N 7/01* (2006.01)

(21) Application number: **05721003.1**

(22) Date of filing: **17.03.2005**

(86) International application number:
**PCT/JP2005/004816**

(87) International publication number:
**WO 2006/098038 (21.09.2006 Gazette 2006/38)**

(84) Designated Contracting States:
**DE FR GB**

(71) Applicant: **MITSUBISHI ELECTRIC CORPORATION**
**Chiyoda-ku**
**Tokyo 100-8310 (JP)**

(72) Inventors:
• **FUJITA, Yuka,**
**Mitsubishi Electric Corp.**
**Tokyo,**
**100-8310 (JP)**
• **TAKAHASHI, Toshiyuki,**
**Mitsubishi Electric Co.**
**Tokyo 100-8310 (JP)**

• **HORI, Atsushi,**
**Mitsubishi Electric Co.**
**Tokyo,**
**100-8310 (JP)**
• **KAWAURA, Takeo,**
**Mitsubishi Electric Co.**
**Tokyo,**
**100-8310 (JP)**
• **HIRAMATSU, Koichi,**
**Mitsubishi Electric Co.**
**Tokyo 100-8310 (JP)**
• **HIDAI, Masashi,**
**Mitsubishi Electric Co.**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **IMAGE PROCESSING DEVICE**

(57)    An image processing device includes a car navigation processing unit 12 for processing a WQVGA signal, a TV receiving processing unit 15 for processing an NTSC signal, and an image resolution converting unit 17 which carries out an image resolution conversion of the NTSC signal from the TV receiving processing unit 15 to a WQVGA signal. The TV receiving processing unit 15 includes a pixel aspect ratio converting unit 104 for carrying out a pixel aspect ratio conversion of character data acquired from a WQVGA-ready character-font set 2, and a graphics/TV image compositing unit 106 for compositing an output from the pixel aspect ratio converting unit 104 with the NTSC signal, and for outputting a composite signal to the image resolution converting unit 17.

FIG. 1

EP 1 860 641 A1

**Description**

Field of the Invention

The present invention relates to an image processing device which processes two or more images of different graphics formats.

Background of the Invention

For example, patent reference 1 discloses a prior art image processing device including an input means for inputting a video signal, a record means for recording the inputted video signal in a recording medium, a reproduction means for reproducing the recorded video signal, a detecting means for selectively detecting a height-to-width ratio of the inputted video signal or a height-to-width ratio of the reproduced video signal, a character image output means for outputting a character image signal having a corresponding height-to-width ratio according to results of the detection of the detecting means, and a superposing means for superimposing the outputted character image signal on the video signal detected by the detecting means, thereby being able to adjust the height-to-width ratio of the character image signal according to the height-to-width ratio of the video signal, and to display the video information and character information having an appropriate height-to-width ratio on a monitor.

Furthermore, patent reference 2 discloses a prior art image processing device including an input switching circuit for inputting two or more video signals, and for outputting a first video signal about a fundamental image, and a second video signal which should be combined with this first video signal, an aspect detector for detecting an aspect recognition signal which is superimposed on the first video signal, and for outputting a control signal on the basis of the result of the detection, an aspect ratio conversion circuit for performing an aspect ratio conversion on the second video signal, a switcher for inputting the second video signal and an output signal of the aspect ratio conversion circuit, and for outputting one of them according to the control signal, a super signal generating circuit for generating a video signal for composition and a key signal on the basis of an output signal of this switcher, and a combining circuit for combining the video signal for composition with the first video signal on the basis of the key signal, thereby combining a plurality of video signals having different pixel aspect ratios automatically.

[Patent reference 1] Patent No. 3141531 (see paragraph numbers 0012 and 0027)
[Patent reference 2] JP,6-113200,A (see paragraph numbers 0004 and 0005)

A problem with the prior art image processing devices constructed as mentioned above is that when characters generated from the same font set are embedded into two or more images having different pixel aspect ratios, and these images are converted according to the image resolution of a single monitor, the shapes of each of the characters displayed differ for each inputted image, and therefore the user cannot be provided with a feeling of consistency in display of characters on the display screen.

The present invention is made in order to solve the above-mentioned problem, and it is therefore an object of the present invention to provide an image processing device which can display characters generated from the same font set which are embedded into two or more inputted images of different pixel aspect ratios in the same format so that the user can be provided with a feeling of consistency in display of characters.

Disclosure of the Invention

An image processing device in accordance with the present invention includes: a first image processing unit for processing a signal having a first graphics format; a second image processing unit for processing a signal having a second graphics format; and an image resolution converting unit for converting the signal having the second graphics format from the second image processing unit into a signal having the first graphics format with an image resolution conversion ratio determined by the first and second graphics formats, and for outputting the converted signal having the first graphics format, the second image processing unit including a pixel aspect ratio converting unit for converting character data acquired from a character-font set with a pixel aspect ratio conversion ratio determined by the first and second graphics formats, and an image compositing unit for compositing an output from the pixel aspect ratio converting unit with the signal having the second graphics format, and for outputting a composite signal to the image resolution converting unit.

The present invention offers an advantage of being able to, when two or more image processing units which adopt different graphics formats use the same character-font set, make how whose character is visible approximate, thereby providing the user with a feeling of consistency in display of characters on the display screen.

Brief Description of the Figures

[Fig. 1] Fig. 1 is a block diagram showing the structure of an image processing device in accordance with embodiment 1 of the present invention;

[Fig. 2] Fig. 2 is a diagram for explaining drawing of characters by a car navigation processing unit and a TV receiving processing unit of the image processing device in accordance with embodiment 1 of the present invention;

[Fig. 3] Fig. 3 is a block diagram showing the internal structure of the TV receiving processing unit of the image processing device in accordance with embodiment 1 of the present invention;

[Fig. 4] Fig. 4 is a block diagram showing the internal structure of a TV receiving processing unit of an image processing device in accordance with embodiment 2 of the present invention;

[Fig. 5] Fig. 5 is a block diagram showing the internal structure of a TV receiving processing unit of an image processing device in accordance with embodiment 3 of the present invention;

[Fig. 6] Fig. 6 is a diagram for explaining a process performed by a character-string-ready reverse aspect converting unit of the image processing device in accordance with embodiment 3 of the present invention;

[Fig. 7] Fig. 7 is a block diagram showing the internal structure of a TV receiving processing unit of an image processing device in accordance with embodiment 4 of the present invention;

[Fig. 8] Fig. 8 is a block diagram showing the internal structure of a TV receiving processing unit of an image processing device in accordance with embodiment 5 of the present invention;

[Fig. 9] Fig. 9 is a block diagram showing the structure of an image processing device in accordance with embodiment 6 of the present invention;

[Fig. 10] Fig. 10 is a diagram showing a monitor image format table which is used for managing an image resolution and a display aspect ratio for each monitor type in the image processing device in accordance with embodiment 6 of the present invention;

[Fig. 11] Fig. 11 is a block diagram showing the structure of an image processing device in accordance with embodiment 7 of the present invention;

[Fig. 12] Fig. 12 is a block diagram showing the internal structure of a car navigation processing unit of the image processing device in accordance with embodiment 7 of the present invention; and

[Fig. 13] Fig. 13 is a block diagram showing the structure of an image processing device in accordance with embodiment 8 of the present invention.

Preferred Embodiments of the Invention

Hereafter, in order to explain this invention in greater detail, the preferred embodiments of the present invention will be described with reference to the accompanying drawings.

Embodiment 1.

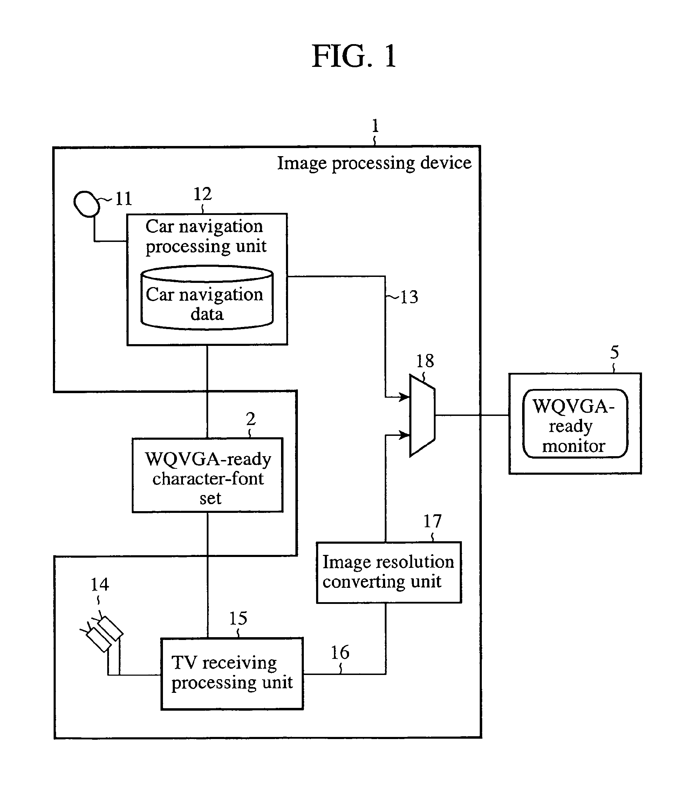

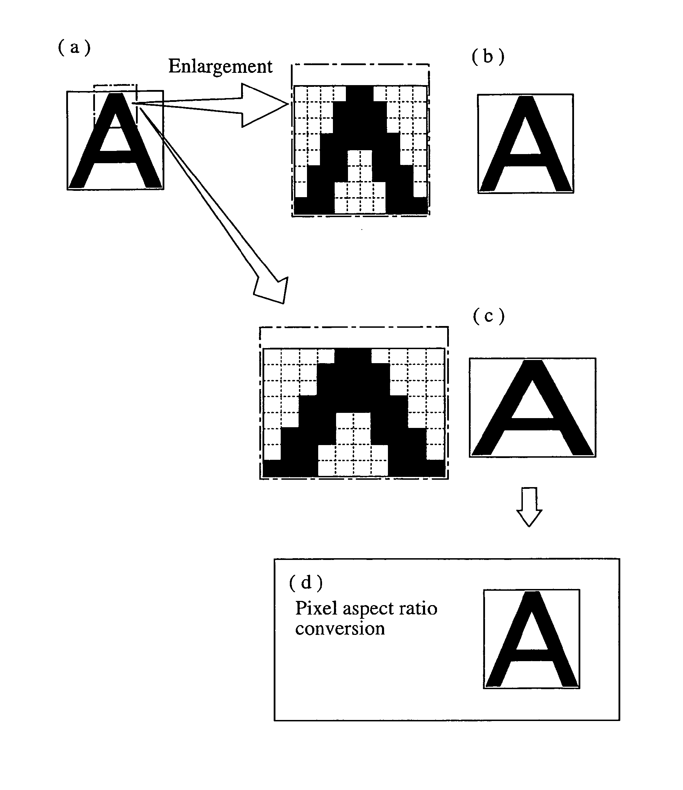

Fig. 1 is a block diagram showing the structure of an image processing device in accordance with embodiment 1 of the present invention, and shows the image processing device which, for example, provides car navigation information and a TV broadcast program for the user using one monitor.

This image processing device 1 is provided with an antenna 11 for car navigation, a car navigation processing unit (i.e., a first image processing unit) 12, a WQVGA (Wide Quarter Video Graphics Array) signal line 13, an antenna 14 for TV, a TV receiving processing unit (i.e., a second image processing unit) 15, an NTSC (National Television System Committee) signal line 16, an image resolution converting unit 17, and a switch 18, and is connected to a WQVGA-ready character-font set (i.e. , a character-font set) 2 and a WQVGA-ready monitor (i.e., a display unit) 5.

In Fig. 1, the antenna 11 for car navigation receives GPS (Global Positioning System) satellite radio waves, an FM signal (Frequency Modulation) broadcasting wave, etc. The car navigation processing unit 12 composites car navigation data stored therein with graphics data, such as route information and real-time traffic information, and outputs the composite image.

The WQVGA signal line 13 is a signal line via which a WQVGA signal which is a video output from the car navigation processing unit 12 is transmitted. This WQVGA signal is a video output about an image having a widthwise aspect ratio of about 16:9 which is based on $320\times240$ pixels which correspond to one half of the height and width of VGA (= $640\times480$ pixels), and has an image resolution which varies somewhat according to the maker of the monitor. In this embodiment 1, a WQVGA signal about an image having a graphics format (i.e., a first graphics format) which is defined by both an image resolution of 480x240 pixels and a display aspect ratio of 16:9 will be explained as an example. The WQVGA-ready character-font set 2 is used by the car navigation processing unit 12 and TV receiving processing unit 15, and conforms to the graphics format defined by both an image resolution of 480×240 pixels and a display aspect ratio of 16:9 which are adopted by the car navigation processing unit 12.

The antenna 14 for TV receives a television broadcasting wave, and the TV receiving processing unit 15 processes the received television broadcasting wave and reproduces a TV image. The NTSC signal line 16 is a signal line via which an NTSC signal about an image output from the TV receiving processing unit 15 is transmitted. Hereafter, an NTSC signal about an image having a graphics format (i.e., a second graphics format) defined by both an image resolution of 720x480 pixels and a display aspect ratio of 16:9 will be explained as an example. The image resolution converting unit 17 carries out an image resolution conversion of the NTSC signal having a graphics format defined by both an image resolution of 720x480 pixels and a display aspect ratio of 16:9 to a WQVGA signal having a graphics format defined by both an image resolution of 480×240 pixels and a display aspect ratio of 16:9.

The switch 18 selects either a WQVGA signal from the WQVGA signal line 13 or a WQVGA signal on which the image resolution conversion is performed by the image resolution converting unit 17, and outputs the selected WQVGA signal. The WQVGA-ready monitor 5 is a monitor which conforms to WQVGA signals, and also conforms to a graphics format which is the same as the graphics format of navigation information outputted from the car navigation processing unit 12.

Next, the operation of the image processing device in accordance with this embodiment of the present invention will be explained.

First, a fundamental car navigation screen display created by the image processing device 1 will be explained.

The car navigation processing unit 12 calculates a vehicle position from position information which is received from satellites by the antenna 11 for car navigation, extracts map contents about an area including the vehicle position from car navigation data stored therein, and draws a figure and characters as a map image of WQVGA size. The car navigation processing unit 12 acquires real-time traffic information, such as information about traffic congestion in an area in the vicinity of the vehicle position, and traffic restriction information, from VICS information which is multiplexed into an FM broadcasting signal received via the antenna 11 for car navigation, composites the real-time traffic information with the map image, and sends out the composite image onto the WQVGA signal line 13 as a WQVGA signal.

The car navigation processing unit 12 further acquires character glyphs (character data) according to character codes from the WQVGA-ready character-font set 2, draws characters, and outputs the character data. A character glyph shows the shape of a character which consists of a bit map or the like, for example. In this case, the switch 18 is made to select the WQVGA signal sent out onto the WQVGA signal line 13, and the WQVGA-ready monitor 5 displays the map image and real-time traffic information.

Hereafter, a fundamental TV broadcast screen display created by the image processing device 1 will be explained similarly with reference to Fig. 1.

The TV receiving processing unit 15 reproduces a TV broadcast image from the broadcasting wave received by the antenna 14 for TV, specifies character codes to the WQVGA-ready character-font set 2 if needed so as to acquire character glyphs (character data), draws characters, and outputs the character data. The TV receiving processing unit then carries out a screen composition of the reproduced TV broadcast image and the character data about the drawn characters, and sends out the composite image onto the NTSC signal line 16 as an NTSC signal.

The graphics format of the composite image outputted from this TV receiving processing unit 15 is defined by both an image resolution of 720x480 pixels and a display aspect ratio of 16:9, and therefore the composite image cannot be displayed on the WQVGA-ready monitor 5 having a graphics format defined by both an image resolution of 480×240 pixels and a display aspect ratio of 16:9, just as it is. Therefore, the image resolution converting unit 17 re-samples the NTSC signal from the TV receiving processing unit 15, as shown in the following equations (1) and (2):

$$\texttt{Horizontal reduction ratio } 480/720 = 2/3 \qquad (1)$$

$$\texttt{Vertical reduction ratio } 240/480 = 1/2 \qquad (2)$$

With this re-sampling, in terms of the number of pixels, the image shown by the NTSC signal from the TV receiving processing unit is horizontally extended so that it has an aspect ratio of 4:3, as shown in the following equation (3). In the explanation of the present invention, this horizontal-to-vertical ratio conversion based on the number of pixels is referred to as the "image resolution conversion", and the used conversion ratio of 4:3 is referred to as the "image resolution conversion ratio" from here on.

$$\texttt{Width : Height = 2/3:1/2 = 4:3} \qquad (3)$$

The WQVGA-ready monitor 5 having a graphics format defined by both an image resolution of 480×240 pixels and a display aspect ratio of 16:9 has a longwise pixel aspect ratio as shown by the following equation (4):

$$\texttt{Width : Height = (16/480):(9/240) = 8:9} \qquad (4)$$

On the other hand, the NTSC signal outputted from the TV receiving processing unit 15 and having a graphics format defined by both an image resolution of 720×480 pixels and a display aspect ratio of 16: 9 has a widthwise pixel aspect ratio as shown by the following equation (5):

$$\texttt{Width : Height = (16/720):(9/480) = 32:27} \qquad (5)$$

For example, in the TV receiving processing unit 15, a rectangle of 10 pixels in every direction is the one of "10:10" in terms of the number of pixels, though it is a widthwise rectangle as a display image for the NTSC signal, as shown in the following equation (6):

$$\texttt{32×10:27×10 = 32:27} \qquad (6)$$

When displaying a rectangle of 10 pixels in the every direction on the WQVGA-ready monitor 5, the image resolution converting unit 17 converts the rectangle into a rectangle with a ratio of 4:3 in terms of the number of pixels. Therefore, a display image is displayed as a widthwise rectangle on the WQVGA-ready monitor 5 with the aspect ratio being maintained, as shown by the following equation (7):

$$\texttt{8×(10×4):9×(10×3) = 32:27} \qquad (7)$$

Thus, when the switch 18 selects the output from the image resolution converting unit 17, a TV broadcast image is displayed on the WQVGA-ready monitor 5 with the aspect ratio of the display image being maintained.
Hereafter, drawing of characters based on character glyphs acquired from the WQVGA-ready character-font set 2 in the car navigation processing unit 12 and TV receiving processing unit 15 will be explained in detail.

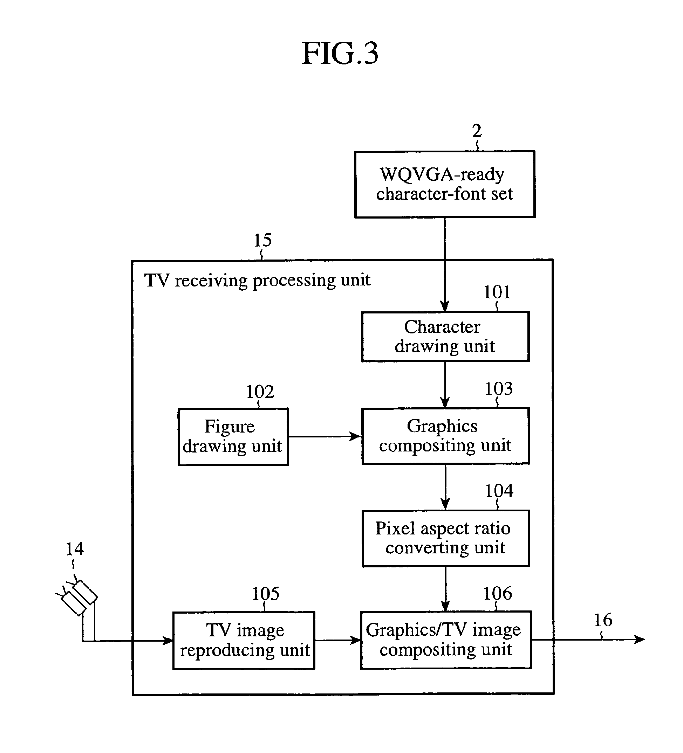

Fig. 2 is a diagram explaining the drawing of characters by the car navigation processing unit 12 and TV receiving processing unit 15. Fig. 2(a) shows a character glyph "A" of 24 pixels in every direction in the case of the graphics format defined by both an image resolution of 480×240 pixels and a display aspect ratio of 16:9. Fig. 2(b) shows a case in which the car navigation processing unit 12 draws a character from this character glyph and displays it on the WQVGA-ready monitor 5. In this case, because the pixel aspect ratio of the WQVGA-ready monitor is 8:9 as shown in the above-mentioned equation (4), the character as a display image has also a longwise ratio of 8: 9, as shown by the following equation (8).

$$\texttt{8×24:9×24 = 8:9} \qquad (8)$$

Fig. 2 (c) shows a case in which the TV receiving processing unit 15 draws a character from the character glyph, and displays it on the WQVGA-ready monitor 5. In this case, although the pixel aspect ratio of the WQVGA-ready monitor is 8:9 as shown in the above-mentioned equation (4), because the number of pixels is converted by the image resolution converting unit 17 with the image resolution conversion ratio of 4:3, the character as a display image has a widthwise size of 32:27, as shown by the following equation (9).

$$8×(24×4):9×(24×3) = 32:27 \qquad (9)$$

Thus, even if both the car navigation processing unit 12 and the TV receiving processing unit 15 acquire the same character glyph from the WQVGA-ready character-font set 2, the character outputted from the car navigation processing unit 12 and the character outputted from the TV receiving processing unit 15 have different pixel aspect ratios. Therefore, they appear differently on the WQVGA-ready monitor 5. Such a difference provides the user with a feeling of inconsistency in display of characters on the display screen. Fig. 2(d) will be mentioned later.

Fig. 3 is a block diagram showing the internal structure of the TV receiving processing unit 15. Hereafter, a case in which a GUI (Graphic User Interface) for various settings is overlaid on an image of a broadcast program, which is provided by the TV receiving processing unit 15, will be explained as an example.
This TV receiving processing unit 15 is provided with a character drawing unit 101, a figure drawing unit 102, a graphics compositing unit 103, a pixel aspect ratio converting unit 104, a TV image reproducing unit 105, and a graphics/TV image compositing unit 106 (i.e., an image compositing unit).

In Fig. 3, the character drawing unit 101 acquires character glyphs corresponding to characters to be displayed on the GUI from the WQVGA-ready character-font set 2, draws the characters, and outputs the character data. The figure drawing unit 102 draws a figure and a still image to be displayed on the GUI, and outputs data about the figure and still image. The graphics compositing unit 103 composites the data about the figure and still image from the figure drawing unit 102 with the character data from the character drawing unit 101, and outputs the composite graphics image. The pixel aspect ratio converting unit 104 performs a conversion on the whole composite graphics image from the graphics compositing unit 103 in order to cancel out an effect produced by the image resolution converting unit 17. The TV image reproducing unit 105 reproduces a TV image included in the TV broadcasting wave which is received by the antenna 14 for TV. The graphics/TV image compositing unit 106 composites the composite graphics image converted by the pixel aspect ratio converting unit 104 with the TV image reproduced by the TV image reproducing unit 105, and sends out the composite image onto the NTSC signal line 16 as an NTSC signal.

Next, the operation of the TV receiving processing unit 15 will be explained.
The TV image reproducing unit 105 decodes image data from the antenna 14 for TV, and outputs an image which is the output result of the decoding to the graphics/TV image compositing unit 106. The figure drawing unit 102 carries out creation of a figure to be displayed as the GUI, decoding of a still image to be displayed as the GUI, etc., and outputs data about the figure and still image to the graphics compositing unit 103.

The character drawing unit 101 inputs the character codes of characters to be displayed as the GUI to the WQVGA-ready character-font set 2 so as to instruct it to output corresponding character glyphs, draws the characters according to the character glyphs output from the WQVGA-ready character-font set 2, and outputs the character data to the graphics compositing unit 103. The graphics compositing unit 103 composites the data about the figure and still image drawn by the figure drawing unit 102 with the character data from the character drawing unit 101, and outputs the composite image to the pixel aspect ratio converting unit 104.

The process performed by the image resolution converting unit 17 of Fig. 1 produces an effect of horizontally extending an input image with the ratio of 4:3 in terms of the number of pixels, as shown in the above-mentioned equation (3). The pixel aspect ratio converting unit 104 carries out a process of horizontally reducing an input image with a conversion ratio of 3:4 in terms of the number of pixels in order to cancel out this effect. For example, the pixel aspect ratio converting unit carries out a pixel-number-based horizontal-to-vertical ratio conversion of reducing the number of horizontal pixels of the input image to three-fourths while maintaining the number of vertical pixels of the input image. In the explanation of the present invention, the pixel-number-based horizontal-to-vertical ratio conversion for canceling out the effect of the image resolution conversion is referred to as the "pixel aspect ratio conversion", and the used conversion ratio of 3:4 is referred to as the "pixel aspect ratio conversion ratio."

That is, when data about a character having a pixel aspect ratio of 8:9 which is drawn according to a character glyph of the WQVGA-ready character-font set 2 is composited with an NTSC signal having a pixel aspect ratio of 32:27, the character has a widthwise size of 32 :27. It is therefore necessary to convert such a character into a character having a correct pixel aspect ratio of 8:9. When x=horizontal reduction ratio and y=vertical reduction ratio, in order to change the pixel aspect ratio of 32:27 to 8:9 according to the above-mentioned equations (4) and (5), the pixel aspect ratio conversion ratio x:y is calculated according to the following equation (10):

$$32x:27y = 8:9$$

$$x:y = (8×27):(9×32) = 3:4 \qquad (10)$$

The graphics/TV image compositing unit 106 composites the composite graphics image outputted from the pixel aspect ratio converting unit 104 with the image outputted from the TV image reproducing unit 105, and sends out the composite image onto the NTSC signal line 16 as an NTSC signal. Processing as previously explained is performed on the NTSC signal while it is transmitted from the NTSC signal line 16 to the WQVGA-ready monitor 5.

When, as a result of carrying out the processing as mentioned above, the TV receiving processing unit 15 displays a character according to a character glyph "A" of 24 pixels in every direction, as previously explained with reference to Fig. 2, on the WQVGA-ready monitor 5, the character has a widthwise size of 32:27 as shown in the above-mentioned equation (9) unless the pixel aspect ratio converting unit 104 is disposed in the image processing device. In contrast, in accordance with this embodiment, the pixel aspect ratio converting unit 104 reduces the size of the character horizontally with the ratio of 3:4, and displays, as a display image, the character so that it has a longwise size of 8:9 as shown by the following equation (11). This character is shown in Fig. 2(d).

$$8 \times (24 \times 3 \times 4) : 9 \times (24 \times 4 \times 3) = 8:9 \qquad (11)$$

Thus, the WQVGA-ready monitor 5 displays characters in the form of the same pixel aspect ratio of 8:9 as that of those displayed by the car navigation processing unit 12.

As mentioned above, in accordance with this embodiment 1, in a case in which the WQVGA-ready character-font set 2, car navigation processing unit 12, and WQVGA-ready monitor 5 adopt the same graphics format, the TV receiving processing unit 15 adopts a different graphics format, and the car navigation processing unit 12 and TV receiving processing unit 15 use the same WQVGA-ready character-font set 2, the image resolution converting unit 17 carries out an image resolution conversion of an NTSC signal from the TV receiving processing unit 15 to a WQVGA signal, and the pixel aspect ratio converting unit 104 carries out a pixel aspect ratio conversion of a composite graphics image containing character data from the WQVGA-ready character-font set 2. Therefore, the car navigation processing unit 12 and TV receiving processing unit 15 can make characters created thereby display and appear in a similar way on the WQVGA-ready monitor 5, and can provide the user with a feeling of consistency in display of the characters on the display screen.

Embodiment 2.

The image processing device in accordance with above-mentioned embodiment 1 carries out an image resolution conversion of a composite graphics image including a figure, a still image and character data and outputs it to the WQVGA-ready monitor 5 after performing an pixel aspect ratio conversion on the composite graphics image, thereby making characters on images outputted by the car navigation processing unit 12 and TV receiving processing unit 15 using the same WQVGA-ready character-font set 2 and having different graphics formats appear in a similar way. In contrast, an image processing device in accordance with this embodiment 2 performs a pixel aspect ratio conversion only on character data.

The image processing device in accordance with embodiment 2 of the present invention has the same structure as shown in the block diagram of Fig. 1 of above-mentioned embodiment 1.

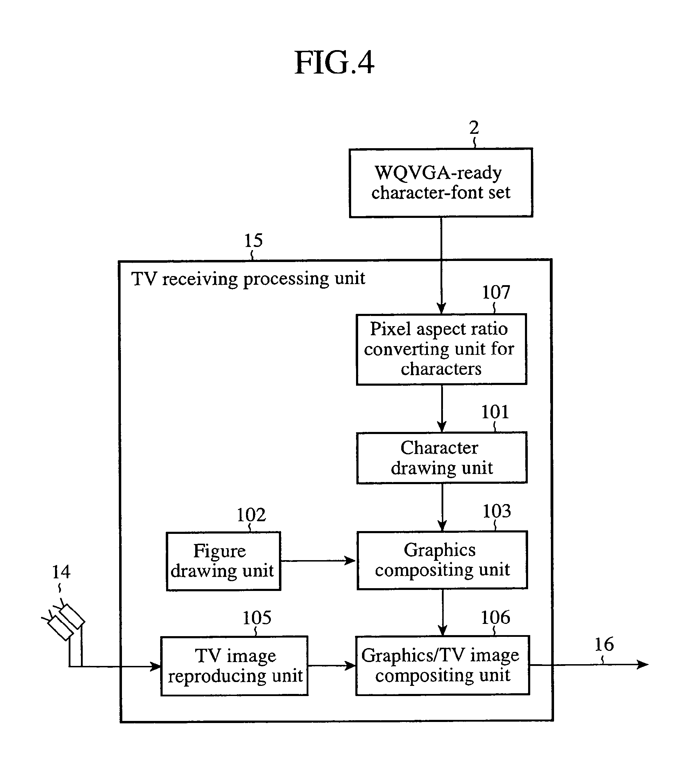

Fig. 4 is a block diagram showing the internal structure of a TV receiving processing unit of the image processing device in accordance with embodiment 2 of the present invention. This TV receiving processing unit 15 additionally includes a pixel aspect ratio converting unit 107 for characters (i.e., a pixel aspect ratio converting unit) which performs a pixel aspect ratio conversion only on character data, instead of the pixel aspect ratio converting unit 104 shown in Fig. 3 of above-mentioned embodiment 1, and the other components of the TV receiving processing unit 15 are the same as those shown in Fig. 3.

Next, an operation of reproducing a TV broadcast image will be explained.
A figure drawing unit 102 carries out creation of a figure to be displayed as a GUI, decoding of a still image to be displayed as the GUI, etc., like that of above-mentioned embodiment 1, and outputs data about them to a graphics compositing unit 103.

The pixel aspect ratio converting unit 107 for characters inputs the character codes of characters to be displayed as the GUI to a WQVGA-ready character-font set 2 so as to make it output corresponding character glyphs, and carries out a pixel aspect ratio conversion of the character glyphs with a pixel aspect ratio conversion ratio of 3:4 according to the above-mentioned equation (10), like that of above-mentioned embodiment 1, and a character drawing unit 101 draws the characters according to the character glyphs on which the pixel aspect ratio conversion is performed and outputs the character data. When performing a process, including the input of the character codes to drawing of the characters, on one screen of the GUI, the character drawing unit 101 outputs the character data about the characters which are drawn to the graphics compositing unit 103.

The graphics compositing unit 103 composites the character data from the character drawing unit 101 with the data about the figure and still image data which are generated by the figure drawing unit 102, and outputs the composite graphics image. A graphics/TV image compositing unit 106 composites the composite graphics image outputted from the graphics compositing unit 103 with an image which is outputted from a TV image reproducing unit 105, and sends out the composite image onto an NTSC signal line 16 as an NTSC signal. An image resolution converting unit 17 of Fig. 1 carries out an image resolution conversion of this NTSC signal so as to convert it into a WQVGA signal, and outputs it to a WQVGA-ready monitor 5. The WQVGA-ready monitor 5 displays characters in the form of the same pixel aspect ratio of 8:9 as those of characters displayed by a car navigation processing unit 12.

As mentioned above, in accordance with this embodiment 2, in a case in which the WQVGA-ready character-font set 2, car navigation processing unit 12, and WQVGA-ready monitor 5 adopt the same graphics format, the TV receiving processing unit 15 adopts a different graphics format, and the car navigation processing unit 12 and TV receiving processing unit 15 use the same WQVGA-ready character-font set 2, the image resolution converting unit 17 carries out an image resolution conversion of an NTSC signal from the TV receiving processing unit 15 so as to convert it into a WQVGA signal, and the pixel aspect ratio converting unit 107 for characters carries out a pixel aspect ratio conversion of character data from the WQVGA-ready character-font set 2, which is to be composited with the NTSC signal. Therefore, the car navigation processing unit 12 and TV receiving processing unit 15 can make characters created thereby display and appear in a similar way on the WQVGA-ready monitor 5, and can provide the user with a feeling of consistency in display of the characters on the display screen.

In above-mentioned embodiment 1, this embodiment 2, and the following embodiments, a case in which a digital TV broadcasting receiver is additionally connected to a car navigation system mounted in a vehicle is explained as an example of the image processing device. This is only an example, and there can be provided any type of image processing device provided with two or more image processing units which use one character-font set and one display unit and which adopt different graphics formats as long as each image processing unit which adopts a graphics format different from that which the character-font set and display unit adopt carries out an image resolution conversion after carrying out a pixel aspect ratio conversion.

Furthermore, in above-mentioned embodiment 1, this embodiment 2, and the following embodiments, the image resolution converting unit 17 is placed behind the TV receiving processing unit 15. As an alternative, the image resolution converting unit can be placed before the display of the composite image finally obtained by the image processing unit, and only has to perform an image resolution conversion on the composite image. The image resolution converting unit can be placed as a final stage of the image processing unit, or can be placed as a top stage of the display unit.

In addition, in this embodiment 2 and the following embodiments, the pixel aspect ratio converting unit is included in the image processing unit. The pixel aspect ratio converting unit can alternatively have another structure as long as it performs a pixel aspect ratio conversion on character glyphs. For example, the pixel aspect ratio converting unit can be provided as a means included in the WQVGA-ready character-font set 2.

Embodiment 3.

The pixel aspect ratio converting unit in accordance with each of above-mentioned embodiments 1 and 2 carries out a pixel aspect ratio conversion on a character-by-character basis, as previously explained. There may be cases where the WQVGA-ready character-font set 2 is so constructed as to output a character string. A pixel aspect ratio converting unit in accordance with this embodiment 3 uses a WQVGA-ready character-font set 2 which outputs character glyphs corresponding to such a character string, and performs a pixel aspect ratio conversion on the character glyphs of the character string.

The image processing device in accordance with embodiment 3 of the present invention has the same structure as shown in the block diagram of Fig. 1 of above-mentioned embodiment 1.

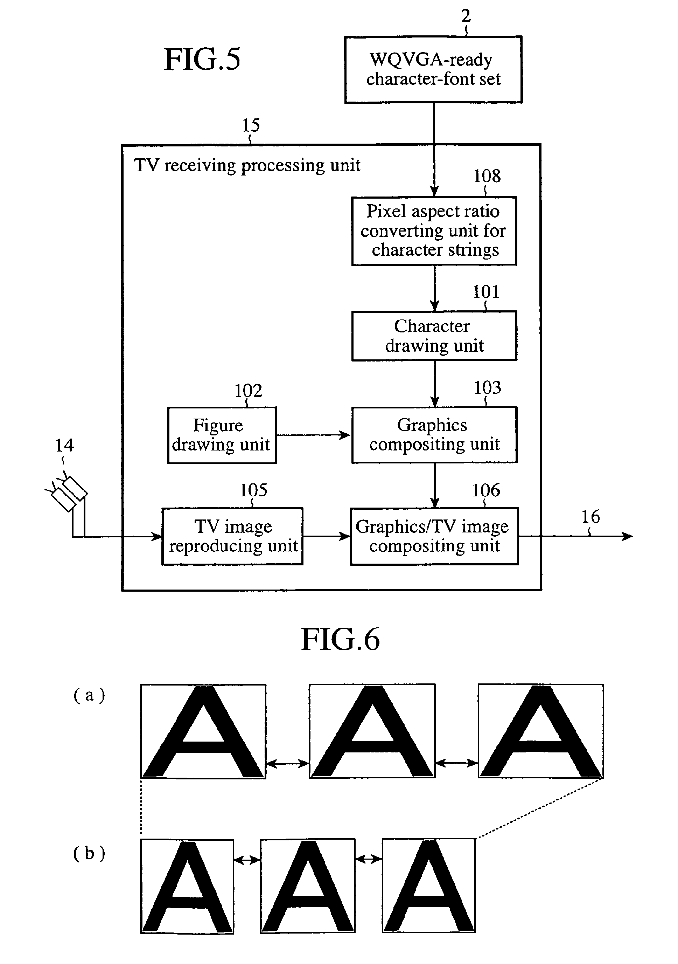

Fig. 5 is a block diagram showing the structure of a TV receiving processing unit of the image processing device in accordance with embodiment 3 of the present invention. This TV receiving processing unit 15 is provided with a character-string-ready pixel aspect ratio converting unit (i.e. , a pixel aspect ratio converting unit) 108 which performs a pixel aspect ratio conversion on a character string, instead of the pixel aspect ratio converting unit 107 for characters as shown in Fig. 4 of above-mentioned embodiment 2, and the other components of the TV receiving processing unit are the same as those shown in Fig. 4.

Next, a pixel aspect ratio conversion on a character string in an operation of reproducing a TV broadcast image will be explained.

A figure drawing unit 102 carries out creation of a figure to be displayed as a GUI, decoding of a still image to be displayed as the GUI, etc., like those of above-mentioned embodiments 1 and 2, and outputs data about them to a graphics compositing unit 103.

The character-string-ready pixel aspect ratio converting unit 108 acquires a character glyph string corresponding to a character string to be displayed as the GUI from the WQVGA-ready character-font set 2, performs a pixel aspect ratio conversion on the character glyph string according to the equation (10) of above-mentioned embodiment 1, and outputs the transformed character glyph string to a character drawing unit 101.

Fig. 6 is a diagram for explaining a process carried out by the character-string-ready pixel aspect ratio converting unit 108. When there is no character-string-ready pixel aspect ratio converting unit 108, characters displayed via the TV receiving processing unit 15 have a widthwise pixel size as shown in Fig. 6(a), and a space between characters (i.e., a distance between characters) similarly complies with the widthwise pixel size. Therefore, the character string-ready pixel aspect ratio conversion unit 108 performs a pixel aspect ratio conversion with a pixel aspect ratio conversion ratio of 3:4 on not only the character glyphs but also the distance between characters, as shown in Fig. 6(b), like that of above-mentioned embodiment 1.

After that, the graphics compositing unit 103 composites the data about the character string drawn by the character drawing unit 101 with the data about the figure and still image which are drawn by the figure drawing unit 102 and outputs the composite graphics image, and a graphics/TV image compositing unit 106 composites the composite graphics outputted from the graphics compositing unit 103 with an image which is outputted from a TV image reproducing unit 105, and sends out the composite image onto an NTSC signal line 16 as an NTSC signal. An image resolution converting unit 17 of Fig. 1 carries out an image resolution conversion of this NTSC signal so as to convert it into a WQVGA signal, and outputs it to a WQVGA-ready monitor 5. The WQVGA-ready monitor 5 displays characters in the form of the same pixel aspect ratio of 8:9 as that of characters displayed by a car navigation processing unit 12.

As mentioned above, in accordance with this embodiment 3, in a case in which the WQVGA-ready character-font set 2, car navigation processing unit 12, and WQVGA-ready monitor 5 adopt the same graphics format, the TV receiving processing unit 15 adopts a different graphics format, and the car navigation processing unit 12 and TV receiving processing unit 15 use the same WQVGA-ready character-font set 2, the image resolution conversion unit 17 carries out an image resolution conversion of an NTSC signal from the TV receiving processing unit 15 so as to convert it into a WQVGA signal, and the character-string-ready pixel aspect ratio conversion unit 108 carries out a pixel aspect ratio conversion of the character data and distance between characters to from the WQVGA-ready character-font set 2 which is to be composited with the NTSC signal. Therefore, the car navigation processing unit 12 and TV receiving processing unit 15 can make characters created thereby display and appear in a similar way on the WQVGA-ready monitor 5, and can provide the user with a feeling of consistency in display of the characters on the display screen.

In this embodiment 3, the character-string-ready pixel aspect ratio conversion unit 108 carries out a pixel aspect ratio conversion of the character data outputted as a character string and distance between characters, as previously explained. When the character data is outputted as plural lines of character strings, the character-string-ready pixel aspect ratio conversion unit only has to perform the same pixel aspect ratio conversion as mentioned in above-mentioned embodiment 1 on the character data, the distance between characters, and a space between lines.

Embodiment 4.

In each of above-mentioned embodiments 1 to 3, a case in which the car navigation processing unit 12, TV receiving processing unit 15, WQVGA-ready character-font set 2, and WQVGA-ready monitor 5 conform to fixed image resolutions, respectively is shown. In TV broadcasting, TV broadcast images having different image resolutions, like an HDTV (High Definition Television) image and an SDTV (Standard Definition Television) image, are provided. In this embodiment 4, a case in which the image resolution of such a TV broadcast image which is handled by a TV receiving processing unit 15 can be varied will be explained.

The image processing device in accordance with embodiment 4 of the present invention has the same structure as shown in the block diagram of Fig. 1 of above-mentioned embodiment 1.

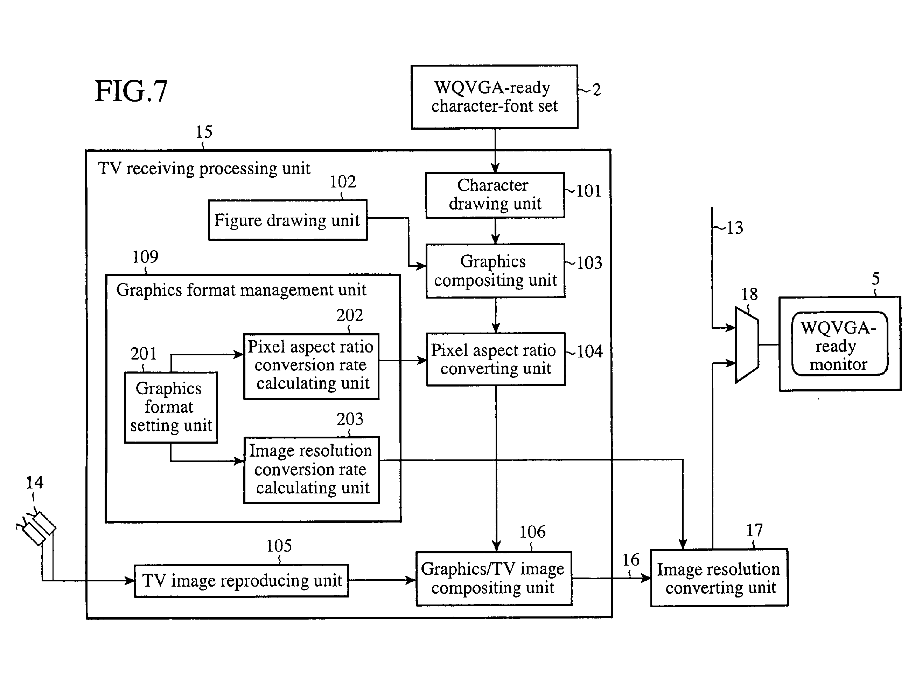

Fig. 7 is a block diagram showing the structure of the TV receiving processing unit of the image processing device in accordance with embodiment 4 of the present invention. This TV receiving processing unit 15 additionally includes a graphics format management unit 109 for managing the graphics formats of TV images in addition to the components of the TV receiving processing unit 15 shown in Fig. 3 of above-mentioned embodiment 1, and the other components of the TV receiving processing unit are the same as those shown in Fig. 3. This graphics format management unit 109 includes a graphics format setting unit 201, a pixel aspect ratio conversion ratio calculating unit 202, and an image resolution conversion ratio calculating unit 203.

In the graphics format management unit 109 of Fig. 7, the graphics format setting unit 201 sets up an image resolution and a display aspect ratio which define the graphics format of a TV image. The pixel aspect ratio conversion ratio calculating unit 202 calculates a pixel aspect ratio conversion ratio from the image resolution and display aspect ratio of the TV image which are notified from the graphics format setting unit 201 and an image resolution and a display aspect ratio which are set beforehand in common to a WQVGA-ready character-font set 2 and a WQVGA-ready monitor 5, and sets the pixel aspect ratio conversion ratio to a pixel aspect ratio converting unit 104.

The image resolution conversion ratio calculating unit 203 calculates an image resolution conversion ratio from the image resolution of the TV image notified from the graphics format setting unit 201, and the image resolution which is set beforehand in common to the WQVGA-ready character-font set 2 and WQVGA-ready monitor 5, and sets the image resolution conversion ratio to an image resolution converting unit 17. The other components of the image processing device are the same as those as shown in Figs. 1 and 3 of embodiment 1.

Next, the operation of the image processing device in accordance with this embodiment of the present invention will be explained.

The graphics format setting unit 201 of the graphics format management unit 109 notifies the image resolution and display aspect ratio of a TV broadcast image which are set up beforehand to the pixel aspect ratio conversion ratio calculating unit 202, and also notifies the image resolution of the TV broadcast image which is set up beforehand to the image resolution conversion ratio calculating unit 203. The pixel aspect ratio conversion ratio calculating unit 202 calculates a pixel aspect ratio conversion ratio from the image resolution and display aspect ratio of the TV broadcast image which are notified thereto, and the known image resolution and display aspect ratio which are set in common to the WQVGA-ready character-font set 2 and WQVGA-ready monitor 5, and sets the pixel aspect ratio conversion ratio to the pixel aspect ratio converting unit 104. The image resolution conversion ratio calculating unit 203 calculates an image resolution conversion ratio from the notified image resolution of the TV broadcast image, and the known image resolution which is set in common to the WQVGA-ready character-font set 2 and WQVGA-ready monitor 5, and sets the image resolution conversion ratio to the image resolution converting unit 17.

After that, a character drawing unit 101 acquires character glyphs from the WQVGA-ready character-font set 2, draws characters, and outputs the character data, like that of above-mentioned embodiment 1, a figure drawing unit 102 draws a figure and a still image, and a graphics compositing unit 103 composites the character data about the characters drawn by the character drawing unit 101 with data about the figure and still image which are drawn by the figure drawing unit 102, and outputs the composite graphics image.

The pixel aspect ratio converting unit 104 carries out a pixel aspect ratio conversion of the composite graphics image from the graphics compositing unit 103 using the pixel aspect ratio conversion ratio calculated by the pixel aspect ratio conversion ratio calculating unit 202. A graphics/TV image compositing unit 106 carries out an image composition of a TV broadcast image reproduced by a TV image reproducing unit 105 and the composite graphics image on which the pixel aspect ratio conversion is performed by the pixel aspect ratio converting unit 104, and sends out the composite image onto an NTSC signal line 16 as an NTSC signal. The image resolution converting unit 17 carries out an image resolution conversion of the NTSC signal using the image resolution conversion ratio calculated by the image resolution conversion ratio calculating unit 203 so as to convert it into a WQVGA signal, and outputs this WQVGA signal to the WQVGA-ready monitor 5. The WQVGA-ready monitor 5 displays characters in the form of the same pixel aspect ratio of 8:9 as that of characters displayed by a car navigation processing unit 12.

As mentioned above, even when receiving one of various TV broadcast programs whose graphics formats can be varied in a case in which the car navigation processing unit 12 and TV receiving processing unit 15 use the same WQVGA-ready character-font set 2, the image processing device in accordance with this embodiment 4 can make characters created thereby display and appear in a similar way on the WQVGA-ready monitor 5 by means of the car navigation processing unit 12 and TV receiving processing unit 15 by calculating a pixel aspect ratio conversion ratio and an image resolution conversion ratio using the graphics format management unit 109 according to the graphics format of the received TV broadcast program, and can provide the user with a feeling of consistency in display of the characters on the display screen.

Embodiment 5.

In the image processing device in accordance with above-mentioned embodiment 4, a variable graphics format which is handled by the TV receiving processing unit 15 is set up beforehand, and a pixel aspect ratio conversion ratio and an image resolution conversion ratio are calculated according to the graphics format. As in a case of digital TV broadcast programs which are scheduled in spots, an image via the same channel may be changed in real time between an image of an HDTV broadcast program and an image of an SDTV broadcast program according to time division programming. In this embodiment 5, a case in which an image which is handled by a TV receiving processing unit 15 varies in real time will be explained.

The image processing device in accordance with embodiment 5 of the present invention includes a real-time image resolution converting unit (i.e., an image resolution converting unit) 21 instead of the image resolution converting unit 17 shown in the block diagram of Fig. 1 of above-mentioned embodiment 1.

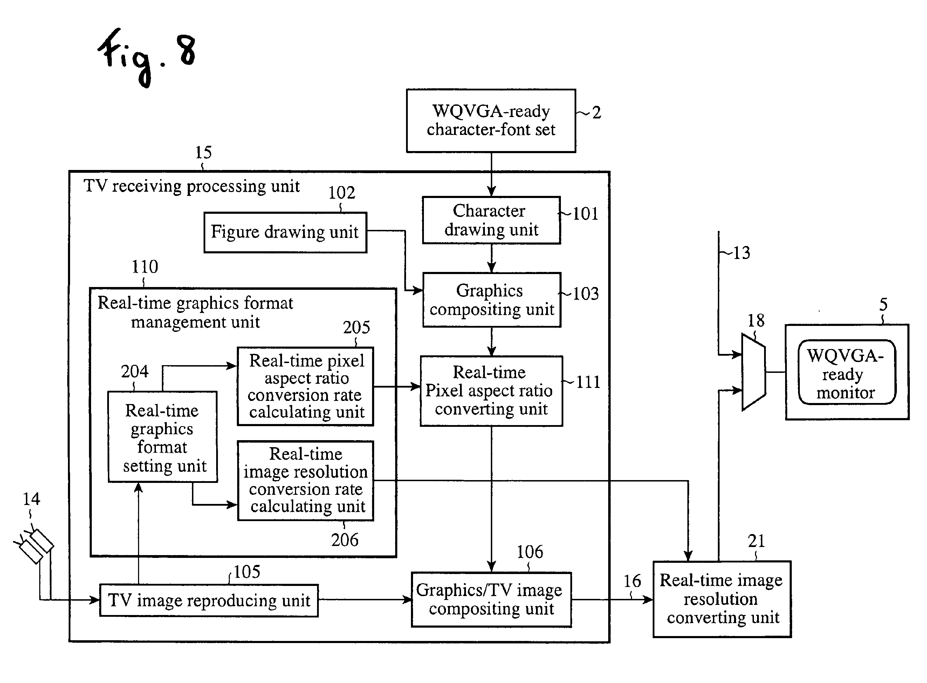

Fig. 8 is a block diagram showing the internal structure of the TV receiving processing unit of the image processing device in accordance with embodiment 5 of the present invention. This TV receiving processing unit 15 has a real-time graphics format management unit 110 instead of the graphics format management unit 109 shown in Fig. 7 of above-mentioned embodiment 4, a real-time pixel aspect ratio converting unit (i.e., a pixel aspect ratio converting unit) 111 instead of the pixel aspect ratio converting unit 104 shown in Fig. 7, and a real-time image resolution converting unit (i.e., an image resolution converting unit) 21 instead of the image resolution converting unit 17 shown in Fig. 7, and can support a real-time change in the graphics format of a TV image. The other components of the TV receiving processing unit are the same as those shown in Fig. 7.

In the TV receiving processing unit 15 of Fig. 8, the real-time graphics format management unit 110 is provided with a real-time graphics format setting unit (i.e., a graphics format setting unit) 204, a real-time pixel aspect ratio conversion ratio calculating unit (i.e., a pixel aspect ratio conversion ratio calculating unit) 205, and a real-time image resolution conversion ratio calculating unit (i.e., an image resolution conversion ratio calculating unit) 206.

In Fig. 8, the real-time graphics format setting unit 204 acquires the graphics format which is varied in real time and its change timing in the TV image reproducing unit 105. The real-time pixel aspect ratio conversion ratio calculating unit 205 calculates a pixel aspect ratio conversion ratio defined by the equation (10) of above-mentioned embodiment 1 from the image resolution and display aspect ratio of the TV image which are notified from the real-time graphics format setting unit 204 and which are varied in real time, and an image resolution and a display aspect ratio which are set beforehand in common to a WQVGA-ready character-font set 2 and a WQVGA-ready monitor 5, and notifies the pixel aspect ratio conversion ratio, as well as the change timing of the graphics format of the TV image, to the real-time pixel aspect ratio converting unit 111.

The real-time image resolution conversion ratio calculating unit 206 calculates an image resolution conversion ratio defined by the equation (3) of above-mentioned embodiment 1 from the image resolution of the TV image which is notified from the real-time graphics format setting unit 204 and which is varied in real time, and the image resolution which is set beforehand in common to the WQVGA-ready character-font set 2 and WQVGA-ready monitor 5, and notifies the image resolution conversion ratio, as well as the change timing of the graphics format of the TV image, to the real-time image resolution converting unit 21.

According to the change timing notified from the real-time pixel aspect ratio conversion ratio calculating unit 205, the real-time pixel aspect ratio converting unit 111 carries out a pixel aspect ratio conversion using the pixel aspect ratio conversion ratio similarly notified from the real-time pixel aspect ratio conversion ratio calculating unit 205. According to the change timing notified from the real-time image resolution conversion ratio calculating unit 206, the real-time image resolution converting unit 21 carries out an image resolution conversion using the image resolution conversion ratio similarly notified from the real-time image resolution conversion ratio calculating unit 206.

Next, the operation of the image processing device in accordance with this embodiment of the present invention will be explained.

The real-time graphics format setting unit 204 of the real-time graphics format management unit 110 monitors the graphics format of an image which is handled by the TV image reproducing unit 105, notifies the image resolution and display aspect which are defined by the changed graphics format which it has acquired in advance of the change, and the change timing to the real-time pixel aspect ratio conversion ratio calculating unit 205, and also notifies the image resolution which is defined by the changed graphics format and change timing to the real-time image resolution conversion ratio calculating unit 206.

The real-time pixel aspect ratio conversion ratio calculating unit 205 calculates a pixel aspect ratio conversion ratio defined by the equation (10) of above-mentioned embodiment 1 from the image resolution and display aspect which are notified thereto, and a known image resolution and a known display aspect which are set in common to the WQVGA-ready character-font set 2 and WQVGA-ready monitor 5, and notifies the pixel aspect ratio conversion ratio, as well as the change timing, to the real-time pixel aspect ratio converting unit 111.

The real-time image resolution conversion ratio calculating unit 206 calculates an image resolution conversion ratio defined by the equation (3) of above-mentioned embodiment 1 from the notified image resolution and the known image resolution which is set in common to the WQVGA-ready character-font set 2 and WQVGA-ready monitor 5, and notifies the image resolution conversion ratio, as well as the change timing, to the real-time image resolution converting unit 21.

After that, a character drawing unit 101 acquires character glyphs from the WQVGA-ready character-font set 2, and draws characters, like that of above-mentioned embodiment 1, a figure drawing unit 102 draws a figure and a still image, and a graphics compositing unit 103 composites character data about the characters drawn by the character drawing unit 101 with data about the figure and still image which are drawn by the figure drawing unit 102.

The real-time pixel aspect ratio converting unit 111 carries out a pixel aspect ratio conversion of the composite graphics image outputted from the graphics compositing unit 103 using the pixel aspect ratio conversion ratio calculated by the real-time pixel aspect ratio conversion ratio calculating unit 205. A graphics/TV image compositing unit 106 carries out an image composition of a TV broadcast image reproduced by a TV image reproducing unit 105 and the composite graphics image on which the pixel aspect ratio conversion is performed by the real-time pixel aspect ratio converting unit 111, and sends out the composite image onto an NTSC signal line 16 as an NTSC signal. The real-time image resolution converting unit 21 carries out an image resolution conversion of the NTSC signal using the image resolution conversion ratio calculated by the real-time image resolution conversion ratio calculating unit 206 so as to convert it into a WQVGA signal, and outputs this WQVGA signal to the WQVGA-ready monitor 5. The WQVGA-ready monitor 5 displays characters in the form of the same pixel aspect ratio of 8:9 as that of characters displayed by a car navigation processing unit 12.

As mentioned above, even when receiving one of various TV broadcast programs whose graphics formats are varied in real time in a case in which the car navigation processing unit 12 and TV receiving processing unit 15 use the same WQVGA-ready character-font set 2, the image processing device in accordance with this embodiment 5 can make characters created thereby display and appear in a similar way on the WQVGA-ready monitor 5 by means of the car navigation processing unit 12 and TV receiving processing unit 15 by calculating a pixel aspect ratio conversion ratio and an image resolution conversion ratio using the real-time graphics format management unit 110 according to the graphics format of the received TV broadcast program, and can provide the user with a feeling of consistency in display of the characters on the display screen.

Embodiment 6.

In accordance with above-mentioned embodiments 4 and 5, the image processing device supports a change in the graphics format of the TV receiving processing unit 15, as previously explained. In this embodiment 6, an image processing device which supports a change in the graphics format of a display unit, such as a WQVGA-ready monitor 5, will be explained.

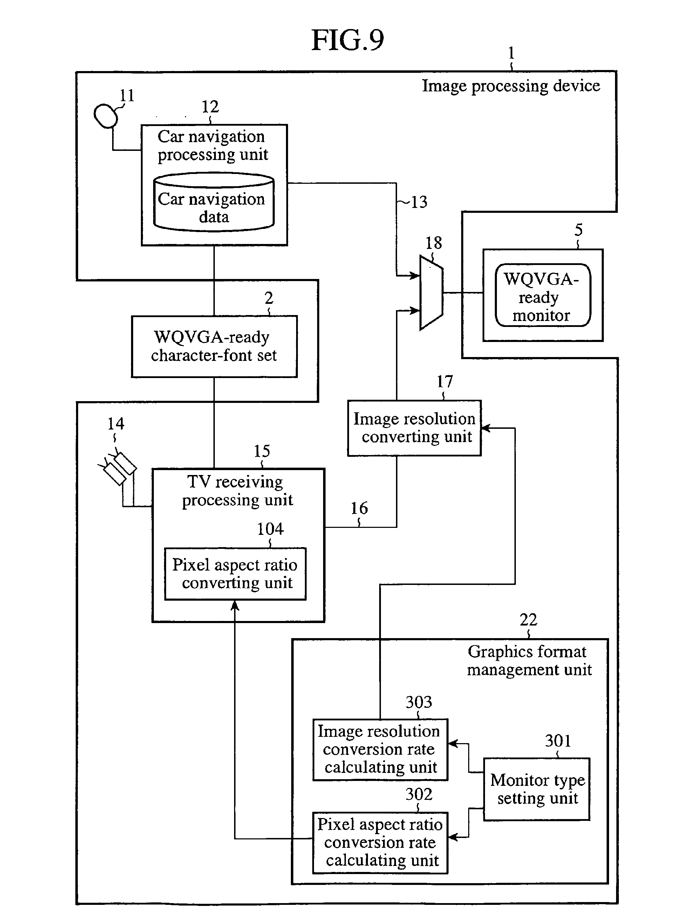

Fig. 9 is a block diagram showing the structure of the image processing device in accordance with embodiment 6 of the present invention. This image processing device 1 additionally includes a graphics format management unit 22 for managing the graphics format of the display unit in addition to the components of the image processing device shown in Fig. 1 of above-mentioned embodiment 1, and the other components of the image processing device are the same as those shown in Fig. 1. The graphics format management unit 22 includes a monitor type setting unit 301, a pixel aspect ratio conversion ratio calculating unit 302, and an image resolution conversion ratio calculating unit 303. The TV receiving processing unit 15 of this embodiment 6 has the same internal structure as shown in the block diagram of Fig. 3 of above-mentioned embodiment 1.

In Fig. 9, the monitor type setting unit 301 acquires the image resolution and display aspect ratio of the display unit from a monitor image format table held thereby according to specification of the type of the display unit by the user. The pixel aspect ratio conversion ratio calculating unit 302 calculates a pixel aspect ratio conversion ratio defined by the above-mentioned equation (10) from the image resolution and display aspect ratio of the display unit which are notified from the monitor type setting unit 301, and the image resolution and display aspect ratio of a TV broadcast image which are set up beforehand, and sets the pixel aspect ratio conversion ratio to the pixel aspect ratio converting unit 104 of the TV receiving processing unit 15. The image resolution conversion ratio calculating unit 303 calculates an image resolution conversion ratio from the image resolution of the display unit notified from the monitor type setting unit 301, and the image resolution of the TV broadcast image which is set up beforehand, and sets the image resolution conversion ratio to the image resolution converting unit 17.

Next, the operation of the image processing device in accordance with this embodiment of the present invention will be explained.

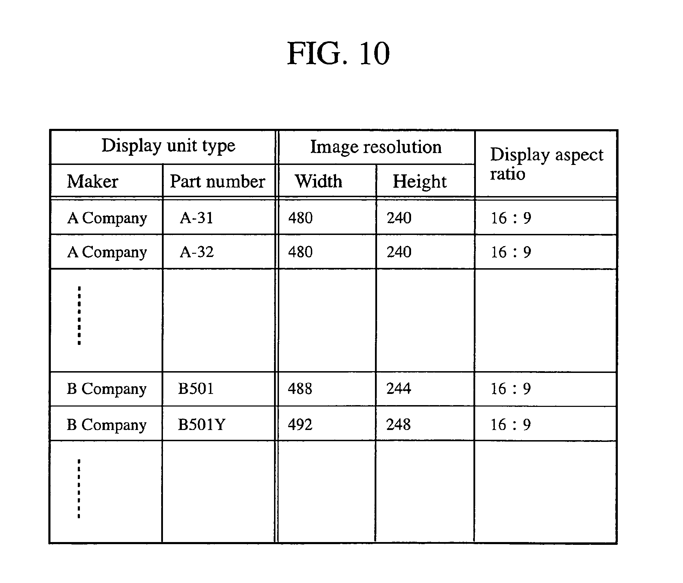

Fig. 10 is a diagram showing the monitor image format table which is used for managing the image resolution and display aspect ratio which are defined by the graphics format of each display unit.

When the user specifies the type of a display unit, for example, the WQVGA-ready monitor 5, the monitor type setting unit 301 of the graphics format management unit 22 acquires the image resolution and display aspect ratio of the display unit from the monitor image format table of Fig. 10, notifies the acquired image resolution and display aspect ratio of the display unit to the pixel aspect ratio conversion ratio calculating unit 302, and also notifies the acquired image resolution of the display unit to the image resolution conversion ratio calculating unit 303.

The pixel aspect ratio conversion ratio calculating unit 302 calculates a pixel aspect ratio conversion ratio defined by the equation (10) of above-mentioned embodiment 1 from the image resolution and display aspect ratio of the display unit which are notified from the monitor type setting unit 301, and the image resolution and display aspect ratio of the TV broadcast image which are set up beforehand, and sets the pixel aspect ratio conversion ratio to the pixel aspect ratio converting unit 104 of the TV receiving processing unit 15. The image resolution conversion ratio calculating unit 303 calculates an image resolution conversion ratio defined by the equation (3) of above-mentioned embodiment 1 from the image resolution of the display unit notified from the monitor type setting unit 301, and the image resolution of the TV broadcast image which is set up beforehand, and sets the image resolution conversion ratio to the image resolution converting unit 17.

After that, a character drawing unit 101 of the TV receiving processing unit 15 shown in Fig. 3 acquires character glyphs from the WQVGA-ready character-font set 2, and draws characters, like that of above-mentioned embodiment 1, a figure drawing unit 102 draws a figure and a still image, and a graphics compositing unit 103 composites character data about the characters drawn by the character drawing unit 101 with data about the figure and still image which are drawn by the figure drawing unit 102.

The pixel aspect ratio converting unit 104 carries out a pixel aspect ratio conversion of the composite graphics image from the graphics compositing unit 103 using the pixel aspect ratio conversion ratio calculated by the pixel aspect ratio conversion ratio calculating unit 302. A graphics/TV image compositing unit 106 carries out an image composition of a TV broadcast image reproduced by a TV image reproducing unit 105 and the composite graphics image on which the pixel aspect ratio conversion is performed by the pixel aspect ratio converting unit 104, and sends out the composite image onto an NTSC signal line 16 as an NTSC signal. The image resolution converting unit 17 carries out an image resolution conversion of the NTSC signal using the image resolution conversion ratio calculated by the image resolution conversion ratio calculating unit 303 so as to convert it into a WQVGA signal, and outputs this image-resolution-converted WQVGA signal to the WQVGA-ready monitor 5 which is specified by the user. The WQVGA-ready monitor 5 displays characters in the form of the same pixel aspect ratio of 8:9 as that of characters displayed by a car navigation processing unit 12.

As mentioned above, even when a display unit is specified by the user in a case in which the car navigation processing unit 12 and TV receiving processing unit 15 use the same WQVGA-ready character-font set 2, the image processing device in accordance with this embodiment 6 can make characters created thereby display and appear in a similar way on the display unit by means of the car navigation processing unit 12 and TV receiving processing unit 15 by calculating a pixel aspect ratio conversion ratio and an image resolution conversion ratio using the graphics format management unit 22 according to a change in the graphics format of the display unit like the WQVGA-ready monitor 5, and can provide the user with a feeling of consistency in display of the characters on the display screen.

In above-mentioned embodiments 4 and 5, and this embodiment 6, a pixel aspect ratio conversion is performed on a composite graphics image in which data about drawn characters are composited with data about a figure and a still image using the pixel aspect ratio conversion ratio, as in the case of above-mentioned embodiment 1. The image processing device can be constructed arbitrarily as long as it performs a pixel aspect ratio conversion on the character data. The image processing device can be so constructed as to perform a pixel aspect ratio conversion on a character glyph, like that of above-mentioned embodiment 2, or can be so constructed as to perform a pixel aspect ratio conversion on character glyphs corresponding to a character string or character glyphs corresponding to a character string including plural lines of characters, like that of above-mentioned embodiment 3.

Embodiment 7.

In above-mentioned embodiments 1 to 6, a case in which the graphics format of the TV broadcast side is made to conform to the graphics format of the car navigation side which is equal to that of the display unit is shown. In this embodiment 7, an example in which the graphics format of a car navigation side is made to conform to the graphics format of a TV broadcast side which is equal to that of a display unit is shown.

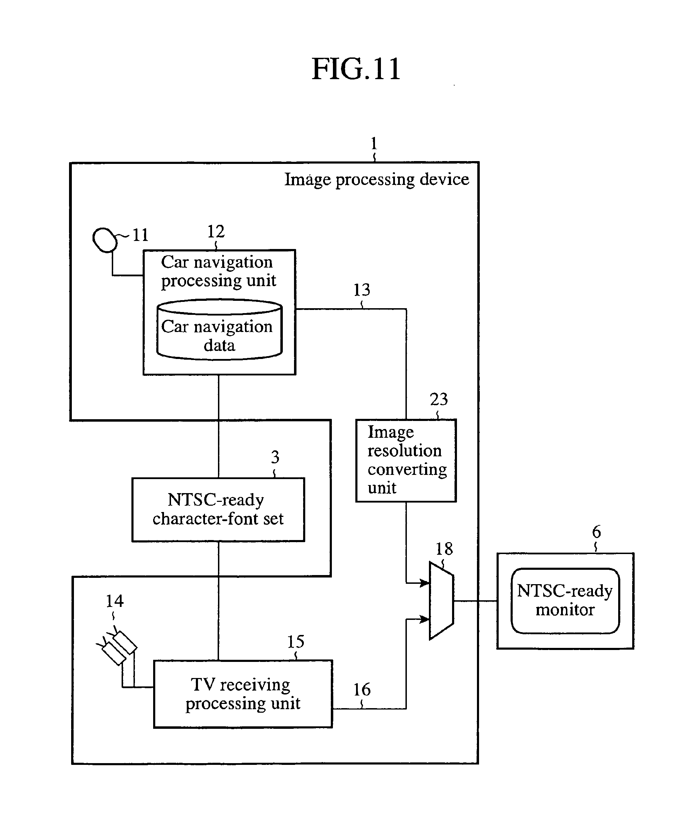

Fig. 11 is a block diagram showing the structure of an image processing device in accordance with embodiment 7 of the present invention. This image processing device has an NTSC-ready character-font set (i.e., a character-font set) 3 instead of the WQVGA-ready character-font set 2 shown in Fig. 1 of above-mentioned embodiment 1, an image resolution converting unit 23 for the car navigation side instead of the image resolution converting unit 17 shown in Fig. 1, and an NTSC-ready monitor (i.e., a display unit) 6 instead of the WQVGA-ready monitor 5 shown in Fig. 1. The other components of the image processing device are the same as those shown in Fig. 1.

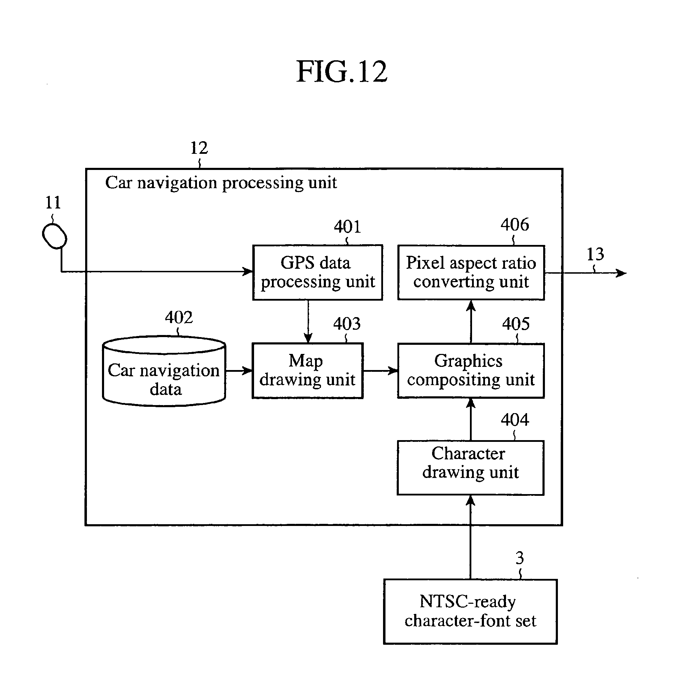

Fig. 12 is a block diagram showing the internal structure of a car navigation processing unit shown in Fig. 11. This car navigation processing unit (i.e., a first image processing unit) 12 includes a GPS data processing unit 401, car navigation data 402, a map drawing unit 403, a character drawing unit 404, a graphics compositing unit (i.e., an image compositing unit) 405, and a pixel aspect ratio converting unit 406.

In Fig. 12, the GPS data processing unit 401 generates vehicle position information, traffic congestion point information, etc. from GPS data received from an antenna 11 for car navigation. The car navigation data 402 stores map information about car navigation etc. as a database. The map drawing unit 403 acquires necessary map data from the car navigation data 402 according to the vehicle position information, traffic congestion point information, etc. from the GPS data processing unit 401, and draws a map as graphic data.

The character drawing unit 404 acquires character glyphs from the NTSC-ready character-font set 3, draws characters, and outputs the character data. The graphics compositing unit 405 composites the graphic data about the map drawn by the map drawing unit 403 with the character data from the character drawing unit 404. The pixel aspect ratio converting unit 406 carries out a pixel aspect ratio conversion of the composite graphics image from the graphics compositing unit 405.

A TV receiving processing unit 15 in accordance with this embodiment 7 has the same internal structure as that shown in the block diagram of Fig. 3 of above-mentioned embodiment 1. In this embodiment 7, a pixel aspect ratio converting unit 104 outputs a composite graphics image from a graphics compositing unit 103 to a graphics/TV image compositing unit 106, just as it is, without performing any pixel aspect ratio conversion on the composite graphics image.

Next, the operation of the image processing device in accordance with this embodiment of the present invention will be explained.

Hereafter, an example in which the NTSC-ready character-font set 3, TV receiving processing unit 15, and NTSC-ready monitor 6 conform to a graphics format (i.e., a second graphics format) which is defined by both an image resolution of 720×480 pixels and a display aspect ratio of 16:9, and the car navigation processing unit 12 conforms to a graphics format (i.e., a first graphics format) which is defined by both an image resolution of 480×240 pixels and a display aspect ratio of 16:9 will be explained.

In order to display the output of the car navigation processing unit 12 on the NTSC-ready monitor 6, the image resolution converting unit 23 carries out an image resolution conversion with the image resolution conversion ratio of 3:4 calculated according to the equations (12) to (14):

$$\texttt{Horizontal reduction ratio 720/480 = 3/2} \qquad (12)$$

$$\texttt{Vertical reduction ratio 480/240 = 2} \qquad (13)$$

$$\texttt{Width : Height = 3/2:2 = 3:4} \qquad (14)$$

Images respectively from the car navigation processing unit 12 and TV receiving processing unit 15 have pixel aspect ratios which are given by the following equations (15) and (16) which are the same as the equations (4) and (5) of above-mentioned embodiment 1, respectively, and the shape of each pixel of the image from the car navigation processing unit differs from that of each pixel of the image from the TV receiving processing unit.

$$\texttt{Width : Height of the image from the car navigation}$$
$$\texttt{processing unit 12 = (16/480):(9/240) = 8:9} \qquad (15)$$

$$\texttt{Width : Height of the image from the TV receiving}$$
$$\texttt{processing unit 15 = (16/720):(9/480) = 32:27} \qquad (16)$$

That is, because when character data about characters having a pixel aspect ratio of 32:27 which are drawn according to character glyphs from the NTSC-ready character-font set 3 are composited with a WQVGA signal having a pixel aspect ratio of 8:9, the characters have a longwise size of 8:9, it is necessary to convert them into characters having a correct pixel aspect ratio of 32:27. Therefore, when x = the horizontal reduction ratio and y = the vertical reduction ratio, in order to change the pixel aspect ratio of 8:9 to 32:27, the pixel aspect ratio conversion ratio for characters is given by the following equation (17):

$$\texttt{8x: 9y = 32:27}$$
$$\texttt{x:y = (9×32):(8×27) = 4:3} \qquad (17)$$

The GPS data processing unit 401 of the car navigation processing unit 12 generates vehicle position information and traffic congestion point information from GPS data which it has acquired by way of the antenna 11 for car navigation, and notifies the vehicle position information and traffic congestion point information to the map drawing unit 403. The map drawing unit 403 acquires map data about an area including the vehicle position from the car navigation data 402 according to the vehicle position information, draws a surrounding map, and overlays figures showing the vehicle position and traffic congestion points on the map.

The character drawing unit 404 acquires character glyphs, such as those corresponding to the name of a place on the map, from the NTSC-ready character-font set 3, and draws characters according to the character data. The graphics compositing unit 405 composites the figures showing the vehicle position and traffic congestion points which are overlaid on the surrounding map which is the output of the map drawing unit 403 with the character data about the characters drawn by the character drawing unit 404. The pixel aspect ratio converting unit 406 performs a pixel aspect ratio conversion according to the equation (17) on the composite graphics image from the graphics compositing unit 405, and outputs the pixel-aspect-ratio-converted composite graphics image via a WQVGA signal line 13.

The image resolution conversion unit 23 performs an image resolution conversion according to the equation (14) on the WQVGA signal outputted from the pixel aspect converting unit 406 so as to convert it into an NTSC signal, so that the figures showing the vehicle position and traffic congestion points which are overlaid on the surrounding map and the characters are displayed on the NTSC-ready monitor 6. The NTSC-ready monitor 6 displays the characters in the form of the pixel aspect ratio of 32:27.

In the TV receiving processing unit 15 of Fig. 3, the graphics compositing unit 103 composites character data about characters drawn by the character drawing unit 101 with data about a figure and a still image drawn by the figure drawing unit 102, and the pixel aspect ratio converting unit 104 outputs the composite graphics image from the graphics compositing unit 103 to the graphics/TV image compositing unit 106, just as it is, without performing any pixel aspect ratio conversion on the composite graphics image. The graphics/TV image compositing unit 106 composites a TV image from a TV image reproducing unit 105 with the composite graphics image, and outputs the composite image to the NTSC-ready monitor 6 via an NTSC signal line 16 as an NTSC signal. The NTSC-ready monitor 6 displays the characters in the form of pixel aspect ratio of 32:27.

As mentioned above, in accordance with this embodiment 7, in a case in which the NTSC-ready character-font set 3, TV receiving processing unit 15, and NTSC-ready monitor 6 adopt the same graphics format, the car navigation processing unit 12 adopts a different graphics format, and the car navigation processing unit 12 and TV receiving processing unit 15 use the same NTSC-ready character-font set 3, the image resolution conversion unit 23 carries out an image resolution conversion of a WQVGA signal from the car navigation processing unit 12 to an NTSC signal, and the pixel aspect ratio converting unit 406 carries out a pixel aspect ratio conversion of a composite graphics image containing character data from the NTSC-ready character-font set 3. Therefore, the image processing device in accordance with this embodiment can make characters created thereby display and appear in a similar way on the NTSC-ready monitor 6 by means of the car navigation processing unit 12 and TV receiving processing unit 15, and can provide the user with a feeling of consistency in display of the characters on the display screen.

The image processing device in accordance with this embodiment 7 carries out a pixel aspect ratio conversion after carrying out a graphics composition of graphics data and character data, like that of above-mentioned embodiment 1. As an alternative, this embodiment can be applied to a case, like above-mentioned embodiment 2 or 3, in which a character glyph, character glyphs of a character string, or character glyphs of plural lines of character strings are composited with graphics data after subjected to a pixel aspect ratio conversion, a case, like above-mentioned embodiment 4 or 5, in which a pixel aspect ratio conversion ratio and an image resolution conversion ratio are calculated and changed according to initial settings of the graphics format to handle or a real-time change of the graphics format, and a case, like above-mentioned embodiment 6, in which display units of different graphics formats are disposed and a pixel aspect ratio conversion ratio and an image resolution conversion ratio are calculated and changed according to initial settings of a display unit connected to the image processing device.

Embodiment 8.

In above-mentioned embodiments 1 to 7, the character-font set has the same graphics format as the display unit, as previously explained. In this embodiment 8, a case in which the graphics format of a character-font set differs from that of a display unit will be explained.

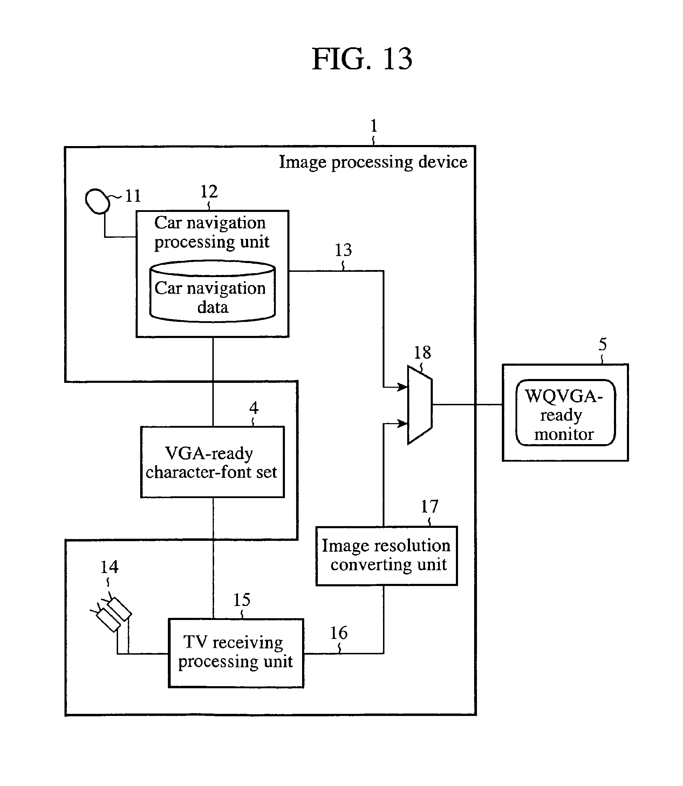

Fig. 13 is a block diagram showing the structure of an image processing device in accordance with embodiment 8 of the present invention. In Fig. 13, instead of the WQVGA-ready character-font set 2 shown in Fig. 1 of above-mentioned embodiment 1, a VGA-ready character-font set (character-font set) 4 which adopts VGA (Video Graphics Array) as an original graphics format is disposed, and the other components of the image processing device are the same as those shown in Fig. 1.

Next, the operation of the image processing device in accordance with this embodiment of the present invention will be explained.

This explanation will be made with reference to Fig. 13 and by substituting the VGA-ready character-font set 4 for the WQVGA-ready character-font set 2 and the NTSC-ready character-font set 3 which are connected to the TV receiving processing unit (i.e., the second image processing unit) 15 shown in Fig. 3 of above-mentioned embodiment 1 and the car navigation processing unit (i.e., the first image processing unit) 12 shown in Fig. 12 of above-mentioned embodiment 7, respectively.

The explanation will be made as to a case in which a car navigation processing unit 12 and a WQVGA-ready monitor 5 have a graphics format (i.e., a first graphics format) defined by both an image resolution of 480×240 pixels and a display aspect ratio of 16:9, a TV receiving processing unit 15 has a graphics format (i.e. , a second graphics format) defined by both an image resolution of 720x480 pixels and a display aspect ratio of 16: 9, and the VGA-ready character-font set 4 has a graphics format (i.e., a third graphics format) defined by both an image resolution of 640×480 pixels and a display aspect ratio of 4:3.

In this case, the pixel aspect ratios of these components are given by the following equations, and their pixel shapes differ from one another.

$$\text{Width : Height of the TV receiving processing unit 15} =$$
$$(16/720):(9/480) = 32:27 \tag{18}$$

$$\text{Width : Height of the car navigation processing unit 12}$$
$$\text{and WQVGA-ready monitor 5} = (16/480):(9/240) = 8:9 \tag{19}$$

$$\text{Width : Height of the VGA-ready character-font set 4} =$$
$$(4/640):(3/480) = 1:1 \tag{20}$$

Because when the car navigation processing unit 12 composites character data about characters having a pixel aspect ratio of 1:1 which are drawn according to character glyphs from the VGA-ready character-font set 4 with a WQVGA signal having a pixel aspect ratio of 8:9, the characters have a longwise size of 8:9, it is necessary to convert them into characters having a correct pixel aspect ratio of 1:1. Therefore, when x = the horizontal reduction ratio and y = the vertical reduction ratio, in order to change the pixel aspect ratio of 8:9 to 1:1, a pixel aspect ratio conversion unit 406 carries out a pixel aspect ratio conversion process with a pixel aspect ratio conversion ratio given by the following equation (21):

$$8x:9y = 1:1$$
$$x:y = 9:8 \tag{21}$$

The car navigation processing unit 12 outputs a WQVGA signal about the composite graphics image on which the above-mentioned pixel aspect ratio conversion is performed to the WQVGA-ready monitor 5 by way of a WQVGA signal line 13. The WQVGA-ready monitor 5 displays the characters in the form of the pixel aspect ratio of 1:1.

Because when the TV receiving processing unit 15 composites character data about characters having a pixel aspect ratio of 1:1 which are drawn according to character glyphs from the VGA-ready character-font set 4 with an NTSC signal having a pixel aspect ratio of 32:27, the characters have a widthwise size of 32:27, it is necessary to convert them into characters having a correct pixel aspect ratio of 1:1. Therefore, when x = the horizontal reduction ratio and y = the vertical reduction ratio, a pixel aspect ratio conversion unit 104 of the TV receiving processing unit 15 carries out a pixel aspect ratio conversion process with a pixel aspect ratio conversion ratio given by the following equation (22):

$$32x:27y = 1:1$$
$$x:y = 27:32 \tag{22}$$

The TV receiving processing unit 15 performs an image resolution conversion on the composite graphics image, on which the above-mentioned pixel aspect ratio conversion is performed and which is composited with a TV image, with an image resolution conversion ratio given by the equation (3) so as to convert it into a WQVGA signal, like that of above-mentioned embodiment 1, and outputs it to the WQVGA-ready monitor 5. The WQVGA-ready monitor 5 displays the characters in the same form of the pixel aspect ratio 1:1 as that in which characters provided by the car navigation processing unit 12 are displayed.

As mentioned above, in accordance with this embodiment 8, in a case in which the car navigation processing unit 12 and WQVGA-ready monitor 5 adopt the same graphics format, the TV receiving processing unit 15 adopts another different graphics format, the VGA-ready character-font set 4 adopts a further different graphics format, and the car navigation processing unit 12 and TV receiving processing unit 15 use the same VGA-ready character-font set 4, the pixel aspect ratio converting unit 406 of the car navigation processing unit 12 carries out a pixel aspect ratio conversion of a composite graphics image containing characters from the VGA-ready character-font set 4, the image resolution conversion unit 17 carries out an image resolution conversion of an NTSC signal from the TV receiving processing unit 15 to a WQVGA signal, and the pixel aspect ratio conversion unit 104 carries out a pixel aspect ratio conversion of a composite graphics image containing characters from the VGA-ready character-font set 4. Therefore, the image processing device in accordance with this embodiment can make characters created thereby display and appear in a similar way on the WQVGA-ready monitor 5 by means of the car navigation processing unit 12 and TV receiving processing unit 15, and can provide the user with a feeling of consistency in display of the characters on the display screen.

The image processing device in accordance with this embodiment 8 carries out a pixel aspect ratio conversion after carrying out a graphics composition of graphics data and character data, like that of above-mentioned embodiment 1. As an alternative, this embodiment can be applied to a case, like above-mentioned embodiment 2 or 3, in which a character glyph, character glyphs of a character string, or character glyphs of plural lines of character strings are composited with graphics data after subjected to a pixel aspect ratio conversion, a case, like above-mentioned embodiment 4 or 5, in which a pixel aspect ratio conversion ratio and an image resolution conversion ratio are calculated and changed according to initial settings of the graphics format to handle or a real-time change of the graphics format, and a case like above-mentioned embodiment 6.

Industrial Applicability

As mentioned above, the image processing device in accordance with the present invention is suitable for applications which make characters created by image processing units which adopt different graphics formats, but use the same character-font set display and appear in a similar way.

## Claims

1.  An image processing device **characterized in that** said image processing device includes:

    a first image processing unit for processing a signal having a first graphics format;
    a second image processing unit for processing a signal having a second graphics format; and
    an image resolution converting unit for converting the signal having the second graphics format from said second image processing unit into a signal having said first graphics format with an image resolution conversion ratio determined by said first and second graphics formats, and for outputting the converted signal having said first graphics format, and
    **characterized in that**
    said second image processing unit includes:
    a pixel aspect ratio converting unit for converting character data acquired from a character-font set with a pixel aspect ratio conversion ratio determined by said first and second graphics formats; and
    an image compositing unit for compositing an output from said pixel aspect ratio converting unit with the signal having said second graphics format, and for outputting a composite signal to said image resolution converting unit.

2.  The image processing device according to claim 1, **characterized in that** the pixel aspect ratio converting unit acquires character data outputted as a character string from the character-font set, and converts the character data and a distance between characters.

3.  The image processing device according to claim 1, **characterized in that** the pixel aspect ratio converting unit acquires character data outputted as a character string including plural lines of characters from a character-font set, and converts the character data, a distance between characters, and a space between lines.

4.  The image processing device according to claim 1, **characterized in that** said image processing device includes a graphics format setting unit for setting up the predetermined second graphics format,
    a pixel aspect ratio conversion ratio calculating unit for calculating the pixel aspect ratio conversion ratio which the pixel aspect ratio converting unit uses from the second graphics format set up by said graphics format setting unit and the first graphics format which is set up beforehand, and
    an image resolution conversion ratio calculating unit for calculating the image resolution conversion ratio which the image resolution converting unit uses from the second graphics format set up by said image format setting unit and the first graphics format which is set up beforehand.

5.  The image processing device according to claim 4, **characterized in that** the graphics format setting unit acquires and sets up the second graphics format which is varied in real time.

6.  The image processing device according to claim 1, **characterized in that** said image processing device includes a monitor type setting unit for holding a monitor image format table showing types of display units and the first graphics format, and for setting up said first graphics format using said monitor image format table according to a set-up type of a display unit,
    a pixel aspect ratio conversion ratio calculating unit for calculating the pixel aspect ratio conversion ratio which the pixel aspect ratio converting unit uses from the first graphics format set up by said monitor type setting unit and the second graphics format which is set up beforehand, and
    an image resolution conversion ratio calculating unit for calculating the image resolution conversion ratio which the image resolution converting unit uses from the first graphics format set up by said monitor type setting unit and the second graphics format which is set up beforehand.

7.  An image processing device **characterized in that** said image processing device includes:

    a first image processing unit for processing a signal having a first graphics format;
    a second image processing unit for processing a signal having a second graphics format; and
    an image resolution converting unit for converting the signal having the first graphics format from said first image processing unit into a signal having said second graphics format with an image resolution conversion ratio determined by said first and second graphics formats, and for outputting the converted signal having said second graphics format, and
    **characterized in that**
    said first image processing unit includes:
    an image compositing unit for compositing character data acquired from a character-font set with the signal having said first graphics format; and
    a pixel aspect ratio converting unit for converting a signal from said image compositing unit with a pixel aspect ratio conversion ratio determined by said first and second graphics formats, and for outputting the converted signal to said image resolution converting unit.

8.  An image processing device **characterized in that** said image processing device includes:

    a first image processing unit for processing a signal having a' first graphics format;
    a second image processing unit for processing a signal having a second graphics format; and
    an image resolution converting unit for converting the signal having the second graphics format from said second image processing unit into a signal having said first graphics format with an image resolution conversion ratio determined by said first and second graphics formats, and for outputting the converted signal having said first graphics format, and
    **characterized in that**
    said first image processing unit includes:
    an image compositing unit for compositing character data acquired from a character-font set having a third graphics format with the signal having said first graphics format; and
    a first pixel aspect ratio converting unit for converts a signal from said image compositing unit with a pixel aspect ratio conversion ratio determined by said first and third graphics formats, and for outputting the converted signal, and
    said second image processing unit includes:
    a second pixel aspect ratio converting unit for converting character data acquired from said character-font set with a pixel aspect ratio conversion ratio determined by said second and third graphics formats; and
an image compositing unit for compositing the character data from said second pixel aspect ratio converting unit with the signal having said second graphics format, and for outputting a composite signal to said image resolution converting unit.

# FIG. 1

( a )

Enlargement

( b )

( c )

( d )

Pixel aspect ratio
conversion

# FIG.3

# FIG.4

2

WQVGA-ready
character-font set

15

TV receiving processing unit

107

Pixel aspect ratio
converting unit for
characters

101

Character
drawing unit

102

Figure
drawing unit

103

Graphics
compositing unit

14

105

TV image
reproducing unit

106

Graphics/TV image
compositing unit

16

FIG.5

2

WQVGA-ready
character-font set

15

TV receiving processing unit

108

Pixel aspect ratio
converting unit for
character strings

101

Character
drawing unit

102

Figure
drawing unit

103

Graphics
compositing unit

14

105

TV image
reproducing unit

106

Graphics/TV image
compositing unit

16

FIG.6

( a )

( b )

# FIG.7

```
                                              ┌─────────────────┐
                                              │   WQVGA-ready   │ ~2
                                              │ character-font  │
                                              │      set        │
                                              └────────┬────────┘
                15                                     │
   ┌───────────────────────────────────────────────────────────────────┐
   │ TV receiving processing unit      102             ▼                │
   │                          ┌──────────────────┐ ┌──────────────┐     │
   │                          │  Figure drawing  │ │  Character   │~101 │
   │                          │      unit        │ │ drawing unit │     │
   │                          └────────────┬─────┘ └──────┬───────┘     │
   │    109                                │              ▼             │
   │ ┌──────────────────────────────┐      │       ┌──────────────┐     │
   │ │ Graphics format management   │      └──────▶│   Graphics   │~103 │
   │ │           unit         202   │              │ compositing  │     │
   │ │                              │              │     unit     │     │
   │ │ 201  ┌────────────────────┐  │              └──────┬───────┘     │
   │ │ ┌──────┐ │ Pixel aspect ratio │ │                  ▼             │
   │ │ │Graphics│ │ conversion rate   │ │          ┌──────────────┐     │
   │ │ │format  ├─▶ calculating unit  ├─┼─────────▶│ Pixel aspect │~104 │
   │ │ │setting │ └────────────────────┘ │        │ ratio        │     │
   │ │ │ unit   │       203             │         │ converting   │     │
   │ │ └───┬────┘ ┌────────────────────┐ │        │    unit      │     │
   │ │     └─────▶│ Image resolution   │ │        └──────┬───────┘     │
   │ │            │ conversion rate    ├─┼──────────────┐│             │
   │ │            │ calculating unit   │ │              ││             │
   │ │            └────────────────────┘ │              ││             │
   │ └──────────────────────────────┘    │             ││             │
   │                                      106           ││             │
   │  105              ┌────────────┐                   ▼│             │
   │ ┌──────────────┐  │Graphics/TV │ 16                 │             │
14 │ │ TV image     ├─▶│image       ├────┐               │             │
   │ │ reproducing  │  │compositing │    │               │             │
   │ │ unit         │  │  unit      │    │               │             │
   │ └──────────────┘  └────────────┘    │               │             │
   └──────────────────────────────────────────────────────────────────┘
```

WQVGA-ready monitor 5 · 18 · 13 · 17 · Image resolution converting unit

EP 1 860 641 A1

## Fig. 8

```
                                    ┌──────────────────┐
                                    │   WQVGA-ready    │──2
                                    │ character-font set│
                                    └──────────────────┘
```

**TV receiving processing unit** — 15

- Figure drawing unit — 102
- Character drawing unit — 101
- Graphics compositing unit — 103

**Real-time graphics format management unit** — 110

- Real-time graphics format setting unit — 204
- Real-time pixel aspect ratio conversion rate calculating unit — 205
- Real-time image resolution conversion rate calculating unit — 206

- Real-time Pixel aspect ratio converting unit — 111

- TV image reproducing unit — 105
- Graphics/TV image compositing unit — 106
- Real-time image resolution converting unit — 21

14 — (antenna)

16

18

13

WQVGA-ready monitor — 5

# FIG.9

Image processing device (1)

- 11
- Car navigation processing unit (12)
- Car navigation data
- ~13
- WQVGA-ready character-font set (2)
- 14
- TV receiving processing unit (15)
- Pixel aspect ratio converting unit (104)
- 16
- 18
- Image resolution converting unit (17)
- WQVGA-ready monitor (5)
- Graphics format management unit (22)
- Image resolution conversion rate calculating unit (303)
- Pixel aspect ratio conversion rate calculating unit (302)
- Monitor type setting unit (301)

# FIG. 10

| Display unit type | | Image resolution | | Display aspect ratio |
|---|---|---|---|---|
| Maker | Part number | Width | Height | |
| A Company | A-31 | 480 | 240 | 16 : 9 |
| A Company | A-32 | 480 | 240 | 16 : 9 |
| ⋮ | | | | |
| B Company | B501 | 488 | 244 | 16 : 9 |
| B Company | B501Y | 492 | 248 | 16 : 9 |
| ⋮ | | | | |

# FIG.11

# FIG.12

12

Car navigation processing unit

11

401

GPS data
processing unit

406

Pixel aspect ratio
converting unit

13

402

Car navigation
data

403

Map
drawing unit

405

Graphics
compositing unit

404

Character
drawing unit

3

NTSC-ready
character-font set

# FIG. 13

1

Image processing device

11
12
Car navigation processing unit

Car navigation data

13

18

5
WQVGA-ready monitor

4
VGA-ready character-font set

17
Image resolution converting unit

14

15
TV receiving processing unit

16

## INTERNATIONAL SEARCH REPORT

| | International application No. |
|---|---|
| | PCT/JP2005/004816 |

**A. CLASSIFICATION OF SUBJECT MATTER**
Int.Cl$^7$ G09G5/26, 5/00, H04N5/445, 7/01

According to International Patent Classification (IPC) or to both national classification and IPC

**B. FIELDS SEARCHED**

Minimum documentation searched (classification system followed by classification symbols)
Int.Cl$^7$ G09G5/00-5/42, H04N5/445, 7/01

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 3141531 B2  (Canon Inc.), 22 December, 2000 (22.12.00), Full text; all drawings & US 5392069 A          & JP 6-6682 A | 1-8 |
| A | JP 6-113200 A  (NEC Corp.), 22 April, 1994 (22.04.94), Full text; all drawings (Family: none) | 1-8 |
| A | JP 2002-112137 A  (Matsushita Electric Industrial Co., Ltd.), 12 April, 2002 (12.04.02), Full text; all drawings (Family: none) | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 May, 2005 (17.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

**Patent documents cited in the description**

- WO 3141531 A

- JP 6113200 A